# EUROPEAN PATENT APPLICATION

(11) **EP 4 779 452 A1**
(43) Date of publication of application: **22.07.2026**
(21) Application number: 25201291.9
(22) Date of filing: 10.09.2025
(51) Int. Cl.: G06F 3/06, G06F 9/50

(54) **SCHEDULING METHOD AND APPARATUS, AND COMPUTER-READABLE STORAGE MEDIUM**

(30) Priority: 20.01.2025 CN 202510089356
(71) Applicant: Beijing Zitiao Network Technology Co., Ltd., Beijing 100190 (CN)
(72) Inventor: Li, Zhigang, Beijing, 100028 (CN)
(74) Representative: Marks & Clerk LLP

(57) **Abstract**

The present disclosure relates to a scheduling method and apparatus, and a computer-readable storage medium, and relates to the field of computer technologies. The scheduling method includes: determining, according to a target device of a first operation request, a device priority corresponding to the first operation request; and determining, according to the device priority and a currently idle hardware resource, whether to issue the first operation request to the target device for processing.

## Description

### TECHNICAL FIELD

The present disclosure relates to the field of computer technologies, and in particular, to a scheduling method, a scheduling apparatus, a computer-readable storage medium, and a computer program product.

### BACKGROUND

Currently, many mobile terminals use a UFS (Universal Flash Storage) as a storage medium. In actual use, one UFS is often divided into storage spaces identified by a plurality of LUNs (Logical Unit Numbers) for use. The storage space identified by each LUN may serve a different purpose, such as a system image, user data, and swap partition.

In the related arts, a different priority is set for a corresponding I/O (Input/Output) operation according to the different purpose of the storage space identified by the LUN. For example, an I/O operation for writing user data has a higher priority than an I/O operation for writing a Log.

### SUMMARY

According to some embodiments of the present disclosure, there is provided a scheduling method, including: determining, according to a target device of a first operation request, a device priority corresponding to the first operation request; and determining, according to the device priority and a currently idle hardware resource, whether to issue the first operation request to the target device for processing.

In some embodiments, the determining, according to the device priority and the currently idle hardware resource, whether to issue the first operation request to the target device for processing includes: determining, according to the device priority, a to-be-reserved hardware resource corresponding to the device priority; and determining, according to the to-be-reserved hardware resource and the currently idle hardware resource, whether to issue the first operation request to the target device for processing.

In some embodiments, the determining, according to the to-be-reserved hardware resource and the currently idle hardware resource, whether to issue the first operation request to the target device for processing includes: issuing, in response to the to-be-reserved hardware resource being less than the currently idle hardware resource, the first operation request to the target device for processing.

In some embodiments, the determining, according to the to-be-reserved hardware resource and the currently idle hardware resource, whether to issue the first operation request to the target device for processing includes: controlling, in response to the to-be-reserved hardware resource being not less than the currently idle hardware resource, the first operation request to enter a wait state until a preset condition is met, the preset condition including another operation request being completed and/or a wait time exceeding a threshold.

In some embodiments, the determining, according to the to-be-reserved hardware resource and the currently idle hardware resource, whether to issue the first operation request to the target device for processing includes: re-determining, in response to the preset condition being met, whether to issue the first operation request to the target device for processing according to the to-be-reserved hardware resource and a currently idle hardware resource.

In some embodiments, the device priority is a first device priority or a second device priority, the first device priority being higher than the second device priority, and a to-be-reserved hardware resource corresponding to the second device priority being more than a to-be-reserved hardware resource corresponding to the first device priority.

In some embodiments, the device priority is the first device priority, the second device priority, or a third device priority, the third device priority being higher than the second device priority but lower than the first device priority, and the determining, according to the device priority, the to-be-reserved hardware resource corresponding to the device priority includes: determining, in response to the device priority being the third device priority, a to-be-reserved hardware resource corresponding to the third device priority according to whether a second operation request of which processing is uncompleted exists currently, a device priority corresponding to the second operation request being the first device priority.

In some embodiments, the determining the to-be-reserved hardware resource corresponding to the third device priority according to whether the second operation request of which processing is uncompleted exists currently includes: configuring, in response to the second operation request not existing, the to-be-reserved hardware resource corresponding to the third device priority to be equal to the to-be-reserved hardware resource corresponding to the first device priority; and configuring, in response to the second operation request existing, the to-be-reserved hardware resource corresponding to the third device priority to be less than the to-be-reserved hardware resource corresponding to the first device priority but more than the to-be-reserved hardware resource corresponding to the second device priority.

In some embodiments, the to-be-reserved hardware resource includes a number of hardware channels to be reserved, and the currently idle hardware resource situation includes a number of currently idle hardware channels.

In some embodiments, the determining, according to the device priority and the currently idle hardware resource, whether to issue the first operation request to the target device for processing includes: sending, in response to determining to issue the first operation request to the target device for processing, the first operation request to a work queue corresponding to the device priority, different device priorities corresponding to different work queues; and processing the first operation request by the target device according to a processing sequence in the work queue corresponding to the device priority.

In some embodiments, the scheduling method further includes: selecting the first operation request from a plurality of operation requests for processing according to an operation priority, the operation priority being determined according to operation type information and/or context information of an operation initiator.

In some embodiments, the device priority is determined according to a current application scenario.

According to other embodiments of the present disclosure, there is provided a scheduling apparatus, including: a determining unit configured to determine, according to a target device of a first operation request, a device priority corresponding to the first operation request; and a processing unit configured to determine, according to the device priority and a currently idle hardware resource, whether to issue the first operation request to the target device for processing.

In some embodiments, the processing unit determines, according to the device priority, a to-be-reserved hardware resource corresponding to the device priority; and determines, according to the to-be-reserved hardware resource and the currently idle hardware resource, whether to issue the first operation request to the target device for processing.

In some embodiments, the processing unit issues, in response to the to-be-reserved hardware resource being less than the currently idle hardware resource, the first operation request to the target device for processing.

In some embodiments, the processing unit controls, in response to the to-be-reserved hardware resource being not less than the currently idle hardware resource, the first operation request to enter a wait state until a preset condition is met, the preset condition including another operation request being completed and/or a wait time exceeding a threshold.

In some embodiments, the processing unit re-determines, in response to the preset condition being met, whether to issue the first operation request to the target device for processing according to the to-be-reserved hardware resource and a currently idle hardware resource.

In some embodiments, the device priority is a first device priority or a second device priority, the first device priority being higher than the second device priority, and a to-be-reserved hardware resource corresponding to the second device priority being more than a to-be-reserved hardware resource corresponding to the first device priority.

In some embodiments, the device priority is the first device priority, the second device priority, or a third device priority, the third device priority being higher than the second device priority but lower than the first device priority, and the processing unit determines, in response to the device priority being the third device priority, a to-be-reserved hardware resource corresponding to the third device priority according to whether a second operation request of which processing is uncompleted exists currently, a device priority corresponding to the second operation request being the first device priority.

In some embodiments, the processing unit configures, in response to the second operation request not existing, the to-be-reserved hardware resource corresponding to the third device priority to be equal to the to-be-reserved hardware resource corresponding to the first device priority; and configures, in response to the second operation request existing, the to-be-reserved hardware resource corresponding to the third device priority to be less than the to-be-reserved hardware resource corresponding to the first device priority but more than the to-be-reserved hardware resource corresponding to the second device priority.

In some embodiments, the to-be-reserved hardware resource includes a number of hardware channels to be reserved, and the currently idle hardware resource situation includes a number of currently idle hardware channels.

In some embodiments, the processing unit sends, in response to determining to issue the first operation request to the target device for processing, the first operation request to a work queue corresponding to the device priority, different device priorities corresponding to different work queues; and processes the first operation request by the target device according to a processing sequence in the work queue corresponding to the device priority.

In some embodiments, the processing unit selects the first operation request from a plurality of operation requests for processing according to an operation priority, the operation priority being determined according to operation type information and/or context information of an operation initiator.

In some embodiments, the device priority is determined according to a current application scenario.

According to yet other embodiments of the present disclosure, there is provided a scheduling apparatus, including: a memory; and a processor coupled to the memory, the processor being configured to perform, based on instructions stored in the memory, a scheduling method in any of the above embodiments.

According to further embodiments of the present disclosure, there is provided a computer-readable storage medium having thereon stored computer instructions which, when executed by a processor, implement a scheduling method in any of the above embodiments.

According to further embodiments of the present disclosure, there is also provided a computer program product, including instructions which, when executed by a processor, cause the processor to perform a scheduling method according to any of the above embodiments.

Other features and aspects of the present disclosure and advantages thereof will become apparent from the detailed description of exemplary embodiments thereof, which proceeds with reference to the following accompanying drawings.

### BRIEF DESCRIPTION OF THE DRAWINGS

Embodiments of the present disclosure are described below with reference to the drawings. It should be understood that the drawings in the following description only relate to some embodiments of the present disclosure and do not limit the present disclosure. In the drawings:
Fig. 1 illustrates a flow diagram of some embodiments according to a scheduling method of the present disclosure;
Figs. 2a and 2b illustrate schematic diagrams of some embodiments according to a scheduling method of the present disclosure;
Fig. 3 illustrates a flow diagram of other embodiments according to a scheduling method of the present disclosure;
Fig. 4 illustrates a block diagram of some embodiments according to a scheduling apparatus of the present disclosure;
Fig. 5 illustrates a block diagram of other embodiments according to a scheduling apparatus of the present disclosure;
Fig. 6 illustrates a block diagram of yet other embodiments according to a scheduling apparatus of the present disclosure.

It should be understood that dimensions of various parts shown in the drawings are not necessarily drawn to actual scale for ease of description. The same or similar reference numbers are used in the drawings to indicate the same or similar components. Therefore, once a certain item is defined in one drawing, it may not be further discussed in subsequent drawings.

### DETAILED DESCRIPTION

The technical solutions in the embodiments of the present disclosure will be clearly and completely described below in conjunction with the drawings in the embodiments of the present disclosure. It should be understood that the present disclosure may be implemented in various forms and should not be construed as limited to the embodiments set forth herein.

It should be understood that various steps recited in method embodiments of the present disclosure may be performed in a different order, and/or performed in parallel. Moreover, the method embodiments may include additional steps and/or omit performing the illustrated steps. The scope of the present disclosure is not limited in this respect. Unless specifically stated otherwise, the relative arrangement, the numerical expressions, and numerical values of the components and steps set forth in these embodiments should be construed as merely exemplary, and not limiting the scope of the present disclosure.

The term "including" used in this disclosure and variations thereof are intended to be open-ended terms that include at least the following elements/features, but do not exclude other elements/features, i.e., "including but not limited to". The term "based on" means "at least partly based on".

It should be noted that the notions such as "first" and "second" mentioned in the present disclosure are only used for distinguishing different devices, modules or units, and are not used for limiting the order or interdependence of the functions performed by the devices, modules or units. Unless otherwise specified, the notions such as "first" and "second" are not intended to imply that the objects so described must be in a given order in time, space, ranking, or any other way.

It should be noted that the modification of "a" or "a plurality" mentioned in this disclosure are illustrative rather than limiting, and that those skilled in the art should appreciate that it should be understood as "one or more" unless otherwise clearly indicated in the context.

The names of messages or information exchanged between a plurality of devices in the embodiments of the present disclosure are for illustrative purposes only, and are not intended to limit the scope of the messages or information.

The embodiments of the present disclosure will be described in detail below in conjunction with the accompanying drawings, but the present disclosure is not limited to these specific embodiments. These specific embodiments may be combined with each other below, and the same or similar concepts or processes may not be repeated in some embodiments. Furthermore, in one or more embodiments, specific features, structures, or characteristics may be combined in any suitable manner which would be understood by one of ordinary skill in the art from this disclosure.

The LUN, as previously described, is a unique identifier for designating a single or a group of physical or virtual storage device(s) that performs an I/O operation with a host, as defined in a small computer system interface (SCSI) standard. The LUN may be used for identifying a data subset in a disk, so that a computing device using the data subset performs an operation. The SCSI is an I/O interconnection that may facilitate data exchange between a server and a storage device by a transmission protocol. The transmission protocol may include Internet SCSI, FC (Fiber Channel), etc. An SCSI initiator in the host initiates an I/O command sequence and then transmits the I/O command sequence to a target endpoint or a receiving storage device. A logical unit is an entity within a SCSI target that responds to an I/O command (including the I/O operation).

For example, in a UFS environment, an LUN is a number for identifying and accessing a logical unit within a storage device, in a storage architecture such as SAN (Storage Area Network) or DAS (Direct Attached Storage). The LUN may have several roles below in the UFS.

Resource division and isolation. The LUN allows division of one physical storage device (e.g., UFS flash memory) into a plurality of logical sections. For example, a UFS chip in a large capacity may be divided into different LUNs, to provide separate storage spaces for different users or applications. The storage space identified by each LUN may store different data and is isolated from each other; and the different users may only access the data in the LUNs corresponding to themselves, improving safety of the data and flexibility of management.

Flexible access control. The storage system may set different access permissions according to the LUNs. For example, for a storage space identified by an LUN where certain sensitive data is located, strict access control may be set, that is, only a specific host or user is allowed to perform read and write operations; and for a storage space identified by an LUN for some public data, it can be set that a wider access permission is allowed.

Improved utilization of storage resources. By the LUN division, a storage administrator may allocate the storage resources more finely according to actual needs. For example, a small application may only need a small storage space, for which a small storage space identified by an LUN may be allocated; and for a large database application, a large storage space identified by an LUN may be allocated. In this way, a waste of a storage space may be avoided, improving resource utilization of the whole UFS storage system.

The I/O operation as previously described includes a synchronous I/O operation, asynchronous I/O operation, and etc. The synchronous I/O operation refers to that, in response to a user space executing an I/O operation, there is a need to wait for a kernel space to complete the I/O operation before execution of a subsequent operation. That is, it is necessary to wait until the kernel space provides data needed by the user space before another operation is continued. For the synchronous I/O, one I/O operation may only be executed at a same time, that is, file handles all are serialized (e.g., atomicity operation), that is, there cannot be two threads executing an I/O operation on a same handle concurrently. The asynchronous I/O refers to that, in response to the user space sending one I/O operation request to the kernel space for an I/O operation, there is no wait but directly continues execution of a work. The asynchronous I/O operation does not block the current thread, and execution of another task may be continued. In response to the I/O operation being completed, the kernel space notifies the user space by a callback function or the like. The asynchronous I/O operation supports a plurality of threads to send I/O operation requests concurrently.

I/O scheduling is that in response to a plurality of I/O request being processed, an operating system decides which I/O operation request is processed first according to a certain algorithm and strategy, thereby improving the system performance and the resource utilization. A main objective of the I/O scheduling strategy is to reduce a wait time for an I/O operation request and improve a throughput and response speed of the system.

Each LUN is, in the system, treated as an independent block device, but from a hardware perspective, these LUNs all share hardware resources on one UFS. For example, the UFS has one hardware queue to process commands, and in response to a queue length being X, X commands may be processed concurrently, that is, all LUNs share the same hardware queue and send the X commands at most concurrently.

For example, it is possible to determine, based on a type of an I/O operation and a context of a thread where the I/O operation request is sent, a priority of the I/O operation request for performing I/O scheduling.

However, in some cases, such as the asynchronous I/O operation, there is not context information of a thread, resulting in all the I/O operation requests being scheduled according to the same priority, without differentiation. This results in that I/O operations in a low priority occupy a large number of I/O resources (e.g. bandwidth, etc.), and I/O operations in a high priority are incapable of obtaining the I/O resources in time, and thereby results in a lag in the I/O operation, reducing processing efficiency of a computer.

In view of the above technical problems, in the technical solution of the present disclosure, a scheduling method for operations is introduced, where a target device for the operation is taken as a basis for setting of a priority of an I/O operation request.

For example, for an I/O operation request where a target device is in a low priority, the opportunity to issue it may be obtained only in response to a current hardware queue being relatively idle, and the number of issued requests is also limited to ensure that the queue is not fully occupied; and for an I/O operation request where a target device is in a high priority, there are not the above limitations.

In this way, the influence of the I/O operation corresponding to the target device in the low priority on the I/O operation for the target device in the high priority may be reduced, improving a response speed of the I/O operation request for the target device in the high priority, reducing a delay of an I/O operation of a user in use of an application, thereby reducing a lag or frame drop of the I/O operation, and improving processing efficiency of a computer.

The inventors of the present disclosure have found that in the related art described above, there are the following problem: an operation in a low priority occupies a large number of resources, reducing scheduling efficiency, and resulting in processing inefficiency of a computer.

In view of this, in the present disclosure, there is provided a scheduling technical solution, capable of improving scheduling efficiency, thereby improving processing efficiency of a computer.

For example, the technical solution of the present disclosure may be implemented by the following embodiments.

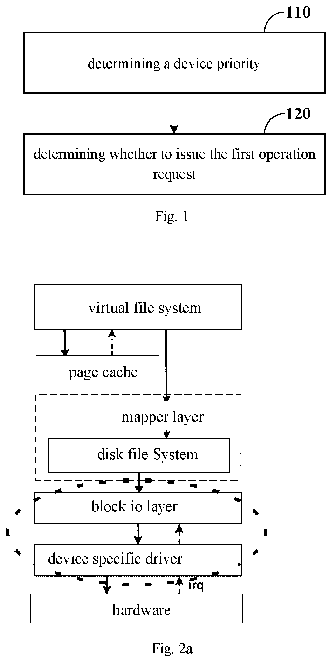

Fig. 1 illustrates a flow diagram of some embodiments according to a scheduling method of the present disclosure.

As shown in Fig. 1, in step 110, according to a target device of a first operation request, a device priority corresponding to the first operation request is determined. For example, the first operation request may be an I/O operation request, the target device may be a device identified by an LUN, and the device priority corresponding to the first operation request may be a device priority corresponding to the LUN of the target device; and the target device may be a processing object of the first operation request, such as various storage devices and processing devices.

In step 120, according to the device priority and a currently idle hardware resource, it is determined whether to issue the first operation request to the target device for processing. For example, a hardware resource may be a hardware queue of a UFS for processing commands, and the currently idle hardware resource may be the number of currently idle hardware queues.

In the above embodiments, the processing priority of the operation request is determined according to the target device of the operation request, in combination with the currently idle hardware resource, avoiding a large number of low-priority operations generated by low-priority services from occupying resources. In this way, scheduling efficiency may be improved, thereby improving processing efficiency of a computer.

How to configure the device priority is exemplified below by some embodiments.

In some embodiments, the device priority is determined according to a current application scenario. For example, an application scenario may include storing or reading a system image, storing or reading user data, swap partition, etc.; different application scenarios may correspond to different performance requirements (for example, high or low requirements for real time performance, high or low requirements for reliability, and the like), and it is possible to configure, according to a performance requirement corresponding to an application scenario of the first operation request, the device priority of the target device of the first operation request.

For example, the current application scenario is a swap partition (such as memory swap) scenario, the first operation request is to swap data to a swap partition, with a low requirement for real time performance; in this case, it is possible to set the device priority of the target device of the first operation request to a lower device priority (such as a second device priority hereinafter).

For example, it is possible to configure, for the system, a device priority configuration module, which is used for configuring, by an upper-level system, a related device priority according to a current application scenario; the device priority configuration module may be implemented by a file node.

In the above embodiments, different device priorities are configured according to different application scenarios, so that the scheduling of the device may adaptively meet different performance requirements, improving scheduling efficiency and thereby improving processing efficiency of a computer.

Determination of the currently idle hardware resource is exemplified below by some embodiments.

In some embodiments, storage devices such as UFS, Embedded Multi Media Card ( EMMC), all support multi-hardware channel technology, that is, a plurality of read and write commands may be processed concurrently; for a device specific driver of the system, a hardware channel may be represented by a Tag, i.e., one Tag corresponds to one hardware channel in the storage device. In response to a hardware channel being occupied, a Tag corresponding to the hardware channel is set to an occupied state; by checking the number of Tags currently in the occupied state, the number of commands being currently processed (e.g., the number of commands processed by the storage device) may be acquired, thereby determining how many currently idle hardware resources there are.

For example, Tags may correspond to hardware channels of a storage device. It is possible to initialize, during hardware initialization, the number of Tags according to an actual storage device, e.g. for implementation of parallel processing on software, the number of Tags may be 2 times the number of hardware channels. It is possible to acquire, during processing of an I/O Request (request for an I/O operation) by a specific driver, the number of Tags currently in an idle state; and in response to the Tag in the idle state existing, set the above Tag to an occupied state, and then send, to the storage device, a command (e.g., the I/O Request); and after completing processing by using a hardware channel corresponding to the above Tag, notify, by the storage device, by using an interrupt, the device specific driver of setting the above Tag to the idle state; and in response to all the Tags being in the occupied state, enter a blocking wait state until a Tag in the idle state exist.

For example, it is possible to determine whether to issue a current I/O operation request to a UFS device related to the current I/O operation request, according to a device priority corresponding to a target device of the current I/O operation request and in combination with the number of the currently idle Tags.

In the above embodiments, the processing priority of the operation request is determined according to the target device of the operation request, in combination with the currently idle hardware resource, avoiding a large number of low-priority operations generated by low-priority services from occupying resources. In this way, scheduling efficiency may be improved, thereby improving processing efficiency of a computer.

How to perform scheduling in combination with the device priority and the currently idle hardware resource is exemplified below by some embodiments.

In some embodiments, according to the device priority, a to-be-reserved hardware resource corresponding to the device priority is determined; and according to the to-be-reserved hardware resource and the currently idle hardware resource, it is determined whether to issue the first operation request to the target device for processing. For example, the to-be-reserved hardware resource may be a hardware resource that the system needs to reserve for another operation request or another task; and the to-be-reserved hardware resource includes a number of hardware channels to be reserved, and the currently idle hardware resource situation includes a number of currently idle hardware channels.

In some embodiments, in the process of acquiring the tag in the idle state, device priority differentiation processing may be performed on the current I/O Request according to an LUN of the target device of the current I/O Request. For example, scheduling may be performed according to a to-be-reserved hardware resource corresponding to a current device priority; the higher the device priority, the less the corresponding to-be-reserved hardware resource can be.

For example, in response to the to-be-reserved hardware resource being less than the currently idle hardware resource, the first operation request is issued to the target device for processing. For example, it is determined whether the number of the Tags currently in the idle state is greater than the number of to-be-reserved Tags; in response to the number of the Tags currently in the idle state being greater, one Tag in the idle state is returned, and the above Tag is marked as the occupied state for processing the current I/O operation request; and the current I/O operation request is issued to related hardware for processing, and thus the dispatch processing of the I/O operation request is completed.

For example, in response to the to-be-reserved hardware resource being not less than the currently idle hardware resource, the first operation request is controlled to enter a wait state until a preset condition is met, the preset condition including anther operation request being completed and/or a wait time exceeding a threshold; and in response to the preset condition being met, it is re-determined whether to issue the first operation request to the target device for processing according to the to-be-reserved hardware resource and a currently idle hardware resource. For example, it is determined whether the number of the Tags currently in the idle state is greater than the number of to-be-reserved Tags; in response to the number of the Tags currently in the idle state being less, it is controlled that a current thread enters an I/O wait state and a CPU enters a wait state; and in response to a new I/O operation request being completed or the wait time overrunning, the above determination step is repeated.

In the above embodiments, according to the target device of the current operation request, differentiation processing is performed on the current operation request according to the device priority, reducing a processing speed of an operation request for a low-priority device, and reserving a certain hardware resource (represented by, for example, the number of Tags) for use by an operation request for a high-priority device. Therefore, it is ensured that the operation request for the high priority device may be processed in time, improving processing efficiency of a computer.

Configuration of a to-be-reserved hardware resource corresponding to a different device priority is exemplified below by some embodiments.

In some embodiments, the device priority is a first device priority or a second device priority, the first device priority being higher than the second device priority; and a to-be-reserved hardware resource corresponding to the second device priority being more than a to-be-reserved hardware resource corresponding to the first device priority.

For example, the first device priority is a high device priority, and the number of corresponding to-be-reserved Tags is a first number (0 or a positive integer), e.g. 0, i.e., no hardware resource needs to be reserved. The first number may also be another positive integer, such as an integer representing 1/5 of the total number of Tags. In response to the current operation request corresponding to the first device priority, the number of high-priority operation requests being processed is increased by 1; and in response to the current operation request being completed, the number of the high-priority operation requests being processed is decreased by 1, this number being used as a scheduling basis of a third device priority to improve the scheduling efficiency.

For example, the second device priority is a low device priority, and the number of corresponding to-be-reserved Tags is a second number greater than the first number, such as an integer representing 1/2 of the total number of Tags.

In this way, according to the target device of the current operation request, differentiation processing is performed on the current operation request according to the device priority, reducing a processing speed of an operation request for a low-priority device, and reserving a certain hardware resource for use by an operation request for a high-priority device. Therefore, it is ensured that the operation request for the high-priority device may be processed in time, improving processing efficiency of a computer.

In some embodiments, the device priority is the first device priority, the second device priority, or a third device priority, the third device priority being higher than the second device priority but lower than the first device priority. In response to the device priority being the third device priority, a to-be-reserved hardware resource corresponding to the third device priority is determined according to whether a second operation request of which processing is uncompleted exists currently, a device priority corresponding to the second operation request being the first device priority.

For example, in response to the second operation request not existing, the to-be-reserved hardware resource corresponding to the third device priority is configured to be equal to the to-be-reserved hardware resource corresponding to the first device priority; and in response to the second operation request existing, the to-be-reserved hardware resource corresponding to the third device priority is configured to be less than the to-be-reserved hardware resource corresponding to the first device priority but more than the to-be-reserved hardware resource corresponding to the second device priority.

For example, the second device priority is a medium device priority, and in response to the current operation request corresponding to the medium device priority, it is determined whether an operation request corresponding to the high device priority of which processing is uncompleted exists currently (which may be determined according to the above maintained number of the high-priority operation requests being processed); in response to not existing, the number of the to-be-reserved Tags corresponding to the medium device priority is set to the first number (e.g., 0, the same as the high device priority); and in response to existing, the number of the to-be-reserved Tags corresponding to the medium device priority is set to a third number, the third number being greater than the first number and less than the second number, such as an integer representing 1/3 of the total number of Tags.

In this way, according to the target device of the current operation request, the currently processed high-priority operation request, and the currently idle hardware resource and the like, differentiation processing is performed on the current operation request according to the device priority, reducing a processing speed of an operation request for a low-priority device, and reserving a certain hardware resource for use by an operation request for a high-priority device. Therefore, it is ensured that the operation request for the high-priority device may be processed in time, improving processing efficiency of a computer.

For an operation request whose type is the asynchronous I/O operation, a thread sending the asynchronous I/O operation request immediately returns after submitting the I/O request to the operating system, without waiting for actual processing of the I/O operation request to be completed. What actually submits the I/O operation request to an I/O scheduler is one work queue (i.e., a type of kernel thread), and I/O operation requests for different target devices are all submitted by the same work queue. In response to a work queue sending the I/O operation request in the low device priority being blocked, a subsequent I/O operation request in the high device priority in the work queue cannot be issued.

In view of the above situation, processing of different types of operation requests is exemplified below by some embodiments.

In some embodiments, for an operation request whose type is the synchronous I/O operation, each synchronous I/O operation is to send an I/O operation request in a context of a certain thread, and then wait for the I/O request to be completed; it is possible to control a thread sending an I/O operation request in a low device priority to enter a wait state, to reserve a Tag for continuing to run another processing thread of an I/O operation request in a high device priority.

In some embodiments, for an operation request whose type is the asynchronous I/O operation, a plurality of work queues may be introduced, which correspond to operation requests in different device priorities, that is, the operation requests in the different device priorities are sent by using different work queues. For example, 3 work queues, namely, a high-priority work queue, a low-priority work queue, and a medium-priority work queue, may be configured for the first device priority, the second device priority, and the third device priority.

For example, in response to determining to issue the first operation request to the target device for processing, the first operation request is sent to a work queue corresponding to the device priority, different device priorities corresponding to different work queues; and the first operation request is processed by the target device according to a processing sequence in the corresponding work queue.

In this way, even if the work queue in the low device priority is blocked, execution of the work queues in the high and medium device priorities is not influenced. Therefore, it is ensured that an operation request for a high-priority device may be processed in time, improving processing efficiency of a computer.

Selection of the current operation request is exemplified below by some embodiments.

In some embodiments, according to an operation priority, the first operation request is selected from a plurality of operation requests for processing, the operation priority being determined according to operation type information and/or context information of an operation initiator.

For example, in the system, an I/O scheduling module may be configured, which is configured to queue, according to a type of a BIO (I/O operation request) and context information of an initiator, the BIO issued by each task according to an operation priority; and send the queued BIO to a device specific driver in a form of a Request.

In the above embodiments, differentiation processing is performed on the operation requests sequentially in combination with the operation priority and the device priority, reducing a processing speed of an operation request for a low-priority device, and reserving a certain hardware resource for use by an operation request for a high-priority device. Therefore, it is ensured that the operation request for the high-priority device may be processed in time, improving processing efficiency of a computer.

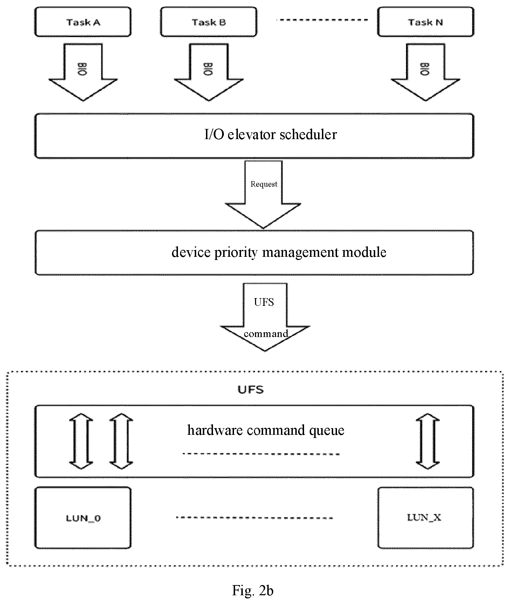

Figs. 2a and 2b illustrate schematic diagrams of some embodiments according to a scheduling method of the present disclosure.

As shown in Fig. 2a, the scheduling method of the present disclosure may be implemented by an I/O stack in the figure. The I/O stack may include a VFS (Virtual File System), page cache, mapper layer, disk file system, block io layer, device specific driver, and HW (Hardware), where an IRQ is an interrupt request. For example, the block io layer and the device specific driver are used for performing a scheduling method in any of the above embodiments, for example, the block io layer may be used for management of Tags, and the device specific driver is used for performing the above scheduling method.

As shown in Fig. 2b, the system converts tasks (Task A, Task B ······ Task N) into BIOs; in the system, an I/O scheduling module (such as an I/O elevator scheduler) may be configured, which is configured to queue, according to a type of the BIO and context information of an initiator, the BIO issued by each task according to an operation priority; and send the queued BIO to the device specific driver in a form of a Request; the device specific driver performs a scheduling method in any of the above embodiments by using a device priority management module (such as LUN priority resource management), and issues the I/O operation request to a hardware command queue of an UFS in a form of a UFS command according to the scheduling result; and the UFS executes each I/O operation request according to the scheduling result, where the UFS may include a plurality of devices (LUN_0 to LUN_X).

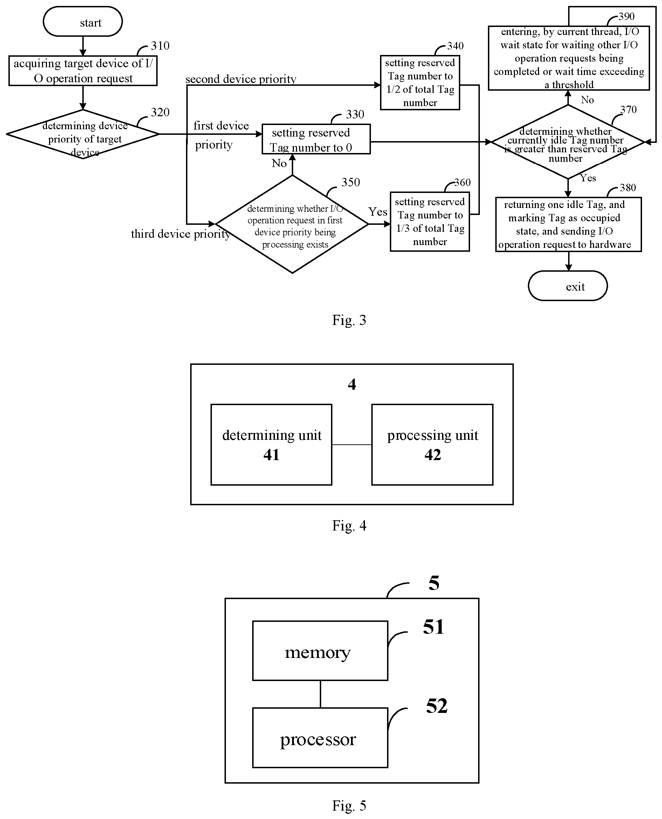

Fig. 3 illustrates a flow diagram of other embodiments according to a scheduling method of the present disclosure.

As shown in Fig. 3, in step 310, a target device of an I/O operation request is acquired.

In step 320, a device priority of the target device is determined. In response to the device priority being a first device priority (i.e., a high device priority), step 330 is performed; in response to the device priority being a second device priority (i.e., a low device priority), step 340 is performed; and in response to the device priority being a third device priority (i.e., a medium device priority), step 350 is performed.

In step 330, for the high device priority, the number of to-be-reserved Tags is set to 0, i.e. no Tag is reserved; and the number of I/O operation requests in a high priority being processed is increased by 1 (decreased by 1 after the I/O operation request is completed).

In step 340, for the low device priority, the number of to-be-reserved Tags is set to 1/2 of the total number of Tags.

In step 350, for the medium device priority, it is first determined whether an I/O operation request in the high device priority of which processing is uncompleted exists currently (which may be obtained according to whether the number of the I/O operation requests in the high priority being processed is 0); in response to not existing, the number of the to-be-reserved Tags is set to 0 (step 330); in response to existing, the number of the to-be-reserved Tags is set to 1/3 of the total number of Tags (step 360).

In step 370, it is determined whether the number of Tags currently in an idle state is greater than the number of the to-be-reserved Tags; in response to the number of the tags currently in the idle state being greater, step 380 is executed; and in response to the number of the Tags currently in the idle state being not greater, step 390 is executed.

In step 380, one Tag in the idle state is returned, and marked as an occupied state; and the I/O operation request is issued to actual hardware for processing, and thus, the dispatch processing of the I/O operation request is completed.

In step 390, it is controlled that a current thread enters an I/O wait state and a CPU enters a wait state; and in response to a new I/O operation request being completed or a wait time exceeding a threshold, the step 370 is repeated.

In some embodiments, in response to an operation priority being determined according to an operation type and context information, the device priority is added during the issuance of the I/O operation request to the hardware queue. The device priority of the I/O operation request is divided according to the target device of the I/O operation request, where processing of an I/O operation request in the low device priority is strictly limited, processing of an I/O operation request in the medium device priority is loosely limited, and processing of an I/O operation request in the high device priority is not limited.

For example, in response to the inability to obtain any hardware resource, the current thread enters an I/O wait state, that is, the current thread is hung up for a period of time before a retry; a condition that the I/O operation request in the low device priority is processed is that, the number of the currently idle hardware queues exceeds a certain threshold (for example, 1/2 of a queue length); a condition that the I/O operation request in the high device priority is processed is that, the number of the currently idle hardware queues is more than 0, i.e., it may be processed in response to an idle resource existing; and a condition that the I/O operation request in the medium device priority is processed is that, in response to no I/O operation request in the high device priority of which processing being uncompleted exists currently in the system, it may be processed in the case that the number of the currently idle hardware queue is greater than 0, and in response to an I/O operation request in the high device priority of which processing being uncompleted exists, it may be processed in the case that the number of the currently idle hardware queue is greater than a certain threshold (e.g. 1/3).

In the above embodiments, the processing priority of the operation request is determined according to the target device of the operation request, in combination with the currently idle hardware resource, avoiding a large number of low-priority operations generated by low-priority services from occupying resources. In this way, an operation request in a lower device priority is apt to enter into a wait state, so that the speed of processing the operation request in the high device priority is increased, and the speed of processing the operation request in the low device priority is reduced, thereby improving processing efficiency of a computer.

Fig. 4 illustrates a block diagram of some embodiments according to a scheduling apparatus of the present disclosure.

As shown in Fig. 4, the scheduling apparatus 4 includes: a determining unit 41 configured to determine, according to a target device of a first operation request, a device priority corresponding to the first operation request; and a processing unit 42 configured to determine, according to the device priority and a currently idle hardware resource, whether to issue the first operation request to the target device for processing.

In some embodiments, the processing unit 42 determines, according to the device priority, a to-be-reserved hardware resource corresponding to the device priority; and determines, according to the to-be-reserved hardware resource and the currently idle hardware resource, whether to issue the first operation request to the target device for processing.

In some embodiments, the processing unit 42 issues, in response to the to-be-reserved hardware resource being less than the currently idle hardware resource, the first operation request to the target device for processing.

In some embodiments, the processing unit 42 controls, in response to the to-be-reserved hardware resource being not less than the currently idle hardware resource, the first operation request to enter a wait state until a preset condition is met, the preset condition including another operation request being completed and/or a wait time exceeding a threshold.

In some embodiments, the processing unit 42 re-determines, in response to the preset condition being met, whether to issue the first operation request to the target device for processing according to the to-be-reserved hardware resource and a currently idle hardware resource.

In some embodiments, the device priority is a first device priority or a second device priority, the first device priority being higher than the second device priority, and a to-be-reserved hardware resource corresponding to the second device priority being more than a to-be-reserved hardware resource corresponding to the first device priority.

In some embodiments, the device priority is the first device priority, the second device priority, or a third device priority, the third device priority being higher than the second device priority but lower than the first device priority, and the processing unit 42 determines, in response to the device priority being the third device priority, a to-be-reserved hardware resource corresponding to the third device priority according to whether a second operation request of which processing is uncompleted exists currently, a device priority corresponding to the second operation request being the first device priority.

In some embodiments, the processing unit 42 configures, in response to the second operation request not existing, the to-be-reserved hardware resource corresponding to the third device priority to be equal to the to-be-reserved hardware resource corresponding to the first device priority; and configures, in response to the second operation request existing, the to-be-reserved hardware resource corresponding to the third device priority to be less than the to-be-reserved hardware resource corresponding to the first device priority but more than the to-be-reserved hardware resource corresponding to the second device priority.

In some embodiments, the to-be-reserved hardware resource includes a number of hardware channels to be reserved, and the currently idle hardware resource situation includes a number of currently idle hardware channels.

In some embodiments, the processing unit 42 sends, in response to determining to issue the first operation request to the target device for processing, the first operation request to a work queue corresponding to the device priority, different device priorities corresponding to different work queues; and processes the first operation request by the target device according to a processing sequence in the work queue corresponding to the device priority.

In some embodiments, the processing unit 42 selects the first operation request from a plurality of operation requests for processing according to an operation priority, the operation priority being determined according to operation type information and/or context information of an operation initiator.

In some embodiments, the device priority is determined according to a current application scenario.

Fig. 5 illustrates a block diagram of other embodiments according to a scheduling apparatus of the present disclosure.

The memory 51 is used for storing one or more computer-readable instructions. The memory 51 may include any combination of various forms of computer-readable storage media, such as a volatile memory and/or nonvolatile memory, including but not limited to a random access memory (RAM), dynamic random access memory (DRAM), static random access memory (SRAM), read-only memory (ROM), flash memory. The memory 51 may store, for example, an operating system, application program, boot loader, database, other program, and the like, and may store various applications, various data, and the like.

The processor 52 is used for running computer-readable instructions to implement a scheduling method according to any of the foregoing embodiments. For the specific implementation of the steps of the scheduling method, reference may be made to the above embodiments, which will not be repeated here.

The processor 52 may be configured to perform the steps of a scheduling method in any of the above embodiments. The processor 52 may be embodied as various processing means, such as a central processing unit (CPU) and network processor (NP); and may also be a digital signal processor (DSP), application specific integrated circuit (ASIC), field programmable gate array (FPGA) or other programmable logic device, discrete gate or transistor logic device, and discrete hardware component. The central processing unit (CPU) may be an X86 or ARM architecture, etc.

The processor 52 and the memory 51 may directly or indirectly communicate with each other. For example, the processor 52 and the memory 51 may communicate via a network. The network may include a wireless network, a wired network, and/or any combination of wireless and wired networks. The processor 52 and the memory 51 may also communicate with each other via a system bus, which is not limited in the present disclosure.

It should be noted that the components of the scheduling apparatus 51 shown in Fig. 5 are only exemplary and not restrictive, and the scheduling apparatus 5 may also have other components according to actual application needs. The processor 52 may control the other components in the scheduling apparatus 5 to perform desired functions.

The scheduling apparatus 5 may be implemented by software, firmware and/or hardware, and may be integrated in an apparatus in which a related application program is installed.

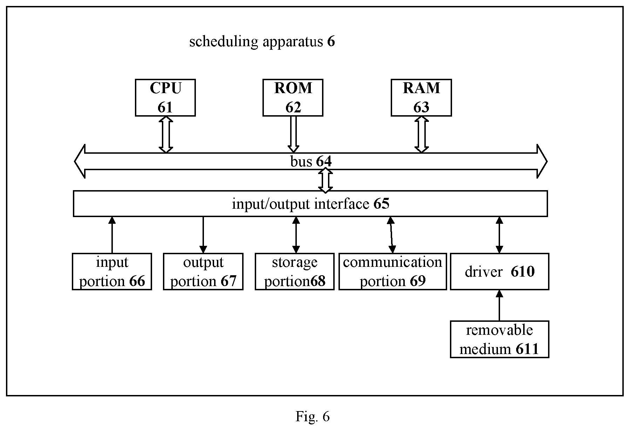

Fig. 6 illustrates a block diagram of yet other embodiments according to a scheduling apparatus of the present disclosure.

The scheduling apparatus 6 shown in Fig. 6 may be a computer system having a dedicated hardware structure, which is capable of performing corresponding functions in response to a related application program being installed.

The scheduling apparatus 6 includes, but is not limited to, a mobile terminal such as a smart phone, laptop, personal digital assistant (PDA), tablet personal computer (Tablet PC), Portable Multimedia Player ( PMP), vehicle-mounted terminal (e.g., vehicle-mounted navigation terminal), and wearable device, and a fixed terminal such as a digital TV and desk computer.

As shown in Fig. 6, a central processing unit (CPU) 61 executes various processes according to a program stored in a read-only memory (ROM) 62 or a program loaded from a storage portion 68 to a random access memory (RAM) 63. In the RAM 63, data needed when the CPU 61 executes various processes and the like is stored as needed. The central processing unit is merely exemplary and may also be another type of processor, such as the various processors described above. The ROM 62, RAM 63, and storage portion 68 may be various forms of computer-readable storage media. It should be noted that although the ROM 62, RAM 63, and storage portion 68 are shown separately in Fig. 6, one or more of them may be combined, or located in the same or different memories or storage modules.

The CPU 61, ROM 62, and RAM 63 are connected to each other via a bus 64. An input/output interface 65 is also connected to the bus 64.

The following components are connected to the input/output interface 65: an input portion 66 such as a touch screen, touch pad, keyboard, mouse, image sensor, microphone, accelerometer, and gyroscope; an output portion 67, including a display such as a cathode ray tube (CRT), liquid crystal display (LCD), speaker, and vibrator; the storage portion 68, including a hard disk, a magnetic tape, and the like; and a communication portion 69, including a network interface card such as a LAN card and modem. The communication portion 69 allows communication processing to be performed via a network such as the Internet. It will be readily appreciated that although it is shown in Fig. 6 that the portions of the scheduling apparatus 6 communicate via the bus 64, they may also communicate via a network or otherwise, where the network may include a wireless network, a wired network, and/or any combination of wireless and wired networks.

A driver 610 is also connected to the input/output interface 65 as needed. A removable medium 611, such as a magnetic disk, optical disk, magneto-optical disk and semiconductor memory, is mounted on the driver 610 as needed, so that a computer program read out therefrom is installed into the storage portion 68 as needed.

In response to the series of processes described above being implemented by software, a program constituting the software may be installed from a network such as the Internet or a storage medium such as the removable medium 611.

According to some embodiments of the present disclosure, the processes described above with reference to the flow diagrams may be implemented as a computer software program. For example, in some embodiments of the present disclosure, a computer program product is included, which, when run on a computer, causes the computer to implement a scheduling method according to any of the foregoing embodiments. The computer program product includes computer instructions carried on a computer-readable medium, where program code for performing the method illustrated by the flow diagrams is contained. In such an embodiment, the computer instructions may be downloaded and installed from a network by the communication portion 69, or installed from the storage portion 68, or installed from the ROM 62. When the computer program is executed by the CPU 61, a scheduling method of any of the embodiments of the present disclosure is executed.

It should be noted that in the context of this disclosure, a computer-readable medium may be a tangible medium that may contain or store a program for use by or in conjunction with an instruction execution system, apparatus, or device.

The computer-readable medium may be a computer-readable storage medium or computer-readable signal medium, or any combination of the two.

The computer-readable storage medium includes, but is not limited to: an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, hard disk, random access memory (RAM), read-only memory (ROM), erasable programmable read-only memory (EPROM or flash memory), optical fiber, portable compact disc read-only memory (CD-ROM), optical storage device, magnetic storage device, or any suitable combination of the foregoing. In the present disclosure, the computer-readable storage medium may be any tangible medium containing or storing a program which may be used by or in conjunction with an instruction execution system, apparatus, or device. The computer-readable storage medium has thereon stored computer instructions which, when executed by the processor, implement a scheduling method according to any of the foregoing embodiments.

The computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, where the computer-readable signal medium may send, propagate, or transmit a program for use by or in conjunction with an instruction execution system, apparatus, or device. The program code contained on the computer-readable medium may be transmitted using any appropriate medium, including but not limited to: a wire, optical cable, RF (Radio Frequency), etc., or any suitable combination of the foregoing.

The above computer-readable medium may be contained in the above electronic device; or may exist separately without being assembled into the electronic device.

In some embodiments, there is also provided a computer program, including: instructions which, when executed by a processor, cause the processor to perform a scheduling method according to any of the foregoing embodiments. For example, the instructions may be embodied as computer program code.

In embodiments of the present disclosure, computer program code for performing the operation of the present disclosure may be written in one or more programming languages or a combination thereof, where the above programming language includes but is not limited to an object-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scenario where a remote computer is involved, the remote computer may be connected to a user's computer through any type of network, including a local area network (LAN) or wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, may be implemented by a special-purpose hardware-based system that performs specified functions or operations, or by a combination of special-purpose hardware and computer instructions.

The functions described above may be executed, at least partially, by one or more hardware logic components. For example, without limitation, an exemplary hardware logic component that may be used includes: a field programmable gate array (FPGA), application specific integrated circuit (ASIC), application specific standard product (ASSP), system on chip (SOC), complex programmable logic device (CPLD), and the like.

Although some specific embodiments of the present disclosure have been described in detail by examples, it should be understood by those skilled in the art that the above examples are for illustration only and are not intended to limit the scope of the present disclosure. It should be understood by those skilled in the art that modifications may be made to the above embodiments without departing from the scope and spirit of the present disclosure. The scope of the present disclosure is defined by the appended claims.

## Claims

1. A scheduling method, comprising:
Determining, according to a target device of a first operation request, a device priority corresponding to the first operation request (110); and
Determining, according to the device priority and a currently idle hardware resource, whether to issue the first operation request to the target device for processing (120).

2. The scheduling method according to claim 1, wherein the determining, according to the device priority and the currently idle hardware resource, whether to issue the first operation request to the target device for processing (120), comprises:
determining, according to the device priority, a to-be-reserved hardware resource corresponding to the device priority; and
determining, according to the to-be-reserved hardware resource and the currently idle hardware resource, whether to issue the first operation request to the target device for processing.

3. The scheduling method according to claim 2, wherein the determining, according to the to-be-reserved hardware resource and the currently idle hardware resource, whether to issue the first operation request to the target device for processing, comprises:
issuing, in response to the to-be-reserved hardware resource being less than the currently idle hardware resource, the first operation request to the target device for processing.

4. The scheduling method according to claim 2, wherein the determining, according to the to-be-reserved hardware resource and the currently idle hardware resource, whether to issue the first operation request to the target device for processing, comprises:
controlling, in response to the to-be-reserved hardware resource being not less than the currently idle hardware resource, the first operation request to enter a wait state until a preset condition is met, the preset condition comprising another operation request being completed and/or a wait time exceeding a threshold.

5. The scheduling method according to claim **4,** wherein the determining, according to the to-be-reserved hardware resource and the currently idle hardware resource, whether to issue the first operation request to the target device for processing, comprises:
re-determining, in response to the preset condition being met, whether to issue the first operation request to the target device for processing according to the to-be-reserved hardware resource and a currently idle hardware resource.

6. The scheduling method according to claim 2, wherein the device priority is a first device priority or a second device priority, the first device priority being higher than the second device priority, and a to-be-reserved hardware resource corresponding to the second device priority being more than a to-be-reserved hardware resource corresponding to the first device priority.

7. The scheduling method according to claim 6, wherein the device priority is the first device priority, the second device priority, or a third device priority, the third device priority being higher than the second device priority but lower than the first device priority, and
the determining, according to the device priority, the to-be-reserved hardware resource corresponding to the device priority, comprises:
determining, in response to the device priority being the third device priority, a to-be-reserved hardware resource corresponding to the third device priority according to whether a second operation request of which processing is uncompleted exists currently, a device priority corresponding to the second operation request being the first device priority.

8. The scheduling method according to claim 7, wherein the determining the to-be-reserved hardware resource corresponding to the third device priority according to whether the second operation request of which processing is uncompleted exists currently, comprises:
configuring, in response to the second operation request not existing, the to-be-reserved hardware resource corresponding to the third device priority to be equal to the to-be-reserved hardware resource corresponding to the first device priority; and
configuring, in response to the second operation request existing, the to-be-reserved hardware resource corresponding to the third device priority to be less than the to-be-reserved hardware resource corresponding to the first device priority but more than the to-be-reserved hardware resource corresponding to the second device priority.

9. The scheduling method according to claim 2, wherein the to-be-reserved hardware resource comprises a number of hardware channels to be reserved, and the currently idle hardware resource situation comprises a number of currently idle hardware channels.

10. The scheduling method according to any of claims 1 to 9, wherein the determining, according to the device priority and the currently idle hardware resource, whether to issue the first operation request to the target device for processing, comprises:
sending, in response to determining to issue the first operation request to the target device for processing, the first operation request to a work queue corresponding to the device priority, different device priorities corresponding to different work queues; and
processing the first operation request by the target device according to a processing sequence in the work queue corresponding to the device priority.

11. The scheduling method according to any of claims 1 to 9, further comprising:
selecting the first operation request from a plurality of operation requests for processing according to an operation priority, the operation priority being determined according to operation type information and/or context information of an operation initiator.

12. The scheduling method according to any of claims 1 to 9, wherein, the device priority is determined according to a current application scenario.

13. A scheduling apparatus (4), comprising:
a determining unit (41) configured to determine, according to a target device of a first operation request, a device priority corresponding to the first operation request; and
a processing unit (42) configured to determine, according to the device priority and a currently idle hardware resource, whether to issue the first operation request to the target device for processing.

14. A scheduling apparatus (5), comprising:
a memory (51); and
a processor (52) coupled to the memory (51), the processor (52) being configured to perform, based on instructions stored in the memory (51), a scheduling method according to any of claims 1 to 12.

15. A computer-readable storage medium having thereon stored computer instructions which, when executed by a processor, implement a scheduling method according to any of claims 1 to 12.
